(19)

Europäisches
Patentamt
European
Patent Office
Office européen
des brevets

(11) **EP 3 943 903 A1**

(12) **EUROPEAN PATENT APPLICATION**
published in accordance with Art. 153(4) EPC

(43) Date of publication:
**26.01.2022 Bulletin 2022/04**

(21) Application number: **20773525.9**

(22) Date of filing: **18.03.2020**

(51) International Patent Classification (IPC):
*G01K 1/20* (2006.01)    *H01M 10/48* (2006.01)
*H02J 7/04* (2006.01)

(52) Cooperative Patent Classification (CPC):
**G01K 1/20; H01M 10/48; H02J 7/04;** Y02E 60/10

(86) International application number:
**PCT/JP2020/012061**

(87) International publication number:
**WO 2020/189727 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2019 JP 2019051227**

(71) Applicant: **GS Yuasa International Ltd.
Kisshoin, Minami-ku,
Kyoto-shi, Kyoto 601-8520 (JP)**

(72) Inventors:
• **OKABE, Yosuke
  Kyoto-shi, Kyoto 601-8520 (JP)**
• **YAMATE, Shigeki
  Kyoto-shi, Kyoto 601-8520 (JP)**

(74) Representative: **Grünecker Patent- und
Rechtsanwälte
PartG mbB
Leopoldstraße 4
80802 München (DE)**

(54) **ESTIMATION DEVICE AND ESTIMATION METHOD**

(57)    Provided are an estimation device and an estimation method. The estimation device includes: an input unit to which an element temperature measured for some energy storage devices among a plurality of energy storage devices constituting an energy storage apparatus and an environmental temperature of the energy storage apparatus are input; and an estimation unit configured to estimate a temperature of each of the energy storage devices based on a heat balance model of each of the energy storage devices expressed by using the element temperature and the environmental temperature.

Fig. 5

```
              ┌─────────┐
              │  Start  │
              └────┬────┘
   S101            │
   ┌───────────────────────────────┐
   │  Acquire element temperature  │
   └───────────────┬───────────────┘
   S102            │
   ┌───────────────────────────────┐
   │ Acquire environmental temperature │
   └───────────────┬───────────────┘
   S103            │
   ┌───────────────────────────────┐
   │ Generate discrete time state  │
   │ equation and observation equation │
   └───────────────┬───────────────┘
   S104            │
   ┌───────────────────────────────┐
   │ Apply Kalman filter to estimate │
   │   temperatures of all energy  │
   │       storage devices         │
   └───────────────┬───────────────┘
                   │
              ┌────┴────┐
              │   End   │
              └─────────┘
```

EP 3 943 903 A1

**Description**

TECHNICAL FIELD

The present invention relates to an estimation device and an estimation method.

BACKGROUND ART

In recent years, energy storage devices such as lithium ion batteries have been used in a wide range of fields such as power sources for portable terminals such as notebook personal computers and smartphones, renewable energy storage systems, and IoT device power sources.

In the operation of a battery including such an energy storage device, it is essential to monitor the temperature of the energy storage device. As a method of monitoring the temperature of the energy storage device, for example, Patent Document 1 discloses a method of dividing a battery cell into a plurality of cell blocks and estimating a temperature of a cell block at a temperature unmeasured position based on a temperature of a cell block at a temperature measurement position where the temperature is measured and a heat generation amount in each cell block.

PRIOR ART DOCUMENT

PATENT DOCUMENT

Patent Document 1: JP-A-2009-99375

SUMMARY OF THE INVENTION

PROBLEMS TO BE SOLVED BY THE INVENTION

However, in the method disclosed in Patent Document 1, since the outside air temperature is not considered at all, it is difficult to accurately estimate the temperature of each cell block.

The present invention has been made in view of such circumstances, and an object of the present invention is to provide an estimation device and an estimation method capable of accurately estimating a temperature of each energy storage device in consideration of an environmental temperature of an energy storage apparatus.

MEANS FOR SOLVING THE PROBLEMS

An estimation device includes: an input unit to which an element temperature measured for some energy storage devices among a plurality of energy storage devices constituting an energy storage apparatus and an environmental temperature of the energy storage apparatus are input; and an estimation unit configured to estimate a temperature of each of the energy storage devices based on a heat balance model of each of the energy storage devices expressed by using the element temperature and the environmental temperature.

An estimation method acquires an element temperature measured for some energy storage devices among a plurality of energy storage devices constituting an energy storage apparatus and an environmental temperature of the energy storage apparatus, and estimates a temperature of each of the energy storage devices based on a heat balance model of each of the energy storage devices expressed by using the element temperature and the environmental temperature.

ADVANTAGES OF THE INVENTION

According to the above configuration, it is possible to accurately estimate the temperature of each energy storage device in consideration of the environmental temperature of the energy storage apparatus.

BRIEF DESCRIPTION OF THE DRAWINGS

Fig. 1 is a schematic external view of an energy storage system according to the present embodiment.
Fig. 2 is a perspective view illustrating a configuration of an energy storage device.
Fig. 3 is a block diagram illustrating an internal configuration of an estimation device.

Fig. 4 is a state variable diagram of an energy storage apparatus.
Fig. 5 is a flowchart illustrating a procedure of processing executed by the estimation device.
Fig. 6 is a circuit diagram illustrating an example of an equivalent circuit model.

MODE FOR CARRYING OUT THE INVENTION

An estimation device includes: an input unit to which an element temperature measured for some energy storage devices among a plurality of energy storage devices constituting an energy storage apparatus and an environmental temperature of the energy storage apparatus are input; and an estimation unit configured to estimate a temperature of each of the energy storage devices based on a heat balance model of each of the energy storage devices expressed by using the element temperature and the environmental temperature.

According to this configuration, the temperature of each energy storage device can be estimated using the element temperatures of some energy storage devices among the plurality of energy storage devices constituting the energy storage apparatus and the environmental temperature.

In the estimation device, the estimation unit may include a filter that estimates a latent variable based on a latest observation value and a model prediction value obtained from an equation describing a system including the energy storage apparatus. Here, the model prediction value is a temperature value of each energy storage device calculated by the above equation, and the observation value is a temperature value actually measured using a temperature sensor. The latent variable is a parameter that has a causal relationship with the observation value but cannot be directly observed. According to this configuration, the temperature in each energy storage device can be estimated using an appropriate filter such as a linear Kalman filter, a non-linear Kalman filter such as an unscented Kalman filter or an extended Kalman filter, or a particle filter.

In the estimation device, the estimation unit may include a Kalman filter that updates a state vector included in a state equation describing the heat balance model based on a latest observation value and a model prediction value obtained from the state equation. In the present specification, the model prediction value is a temperature value calculated by the heat balance model described by the state equation, and the observation value is a temperature value measured by the temperature sensor. According to this configuration, since temperature estimation is performed using the Kalman filter, a value closer to a true value can be calculated even when noise is included in the system or the sensor.

In the estimation device, the heat balance model may include a heat balance between the energy storage devices and a heat balance between each of the energy storage devices and a surrounding environment. According to this configuration, it is possible to estimate the temperature of each energy storage device in consideration of the surrounding environment of the energy storage apparatus.

In the estimation device, the heat balance model may include a thermal conductance between the energy storage devices as a parameter, and the estimation unit may change a value of the thermal conductance used for temperature estimation of each of the energy storage devices according to a change in strain of the energy storage devices. According to this configuration, even when the thermal conductance between the energy storage devices changes with time, the temperature of each energy storage device can be estimated.

In the estimation device, the heat balance model may include, as a parameter, a heat transfer coefficient from each of the energy storage devices to a surrounding environment, and the estimation unit may change a value of the heat transfer coefficient used for temperature estimation of each of the energy storage devices according to a flow velocity of a surrounding fluid. According to this configuration, even when the heat transfer coefficient between each energy storage device and the outside changes with time, the temperature of each energy storage device can be estimated.

An estimation device includes: an input unit to which environmental temperature information around an energy storage device and element temperature information of another energy storage device other than the energy storage device are input; and an estimation unit configured to estimate a temperature of each of the energy storage devices from a heat balance of each of the energy storage devices based on the information input to the input unit.

According to this configuration, the temperature of each energy storage device can be estimated based on the environmental temperature information around the energy storage device and the element temperature information of another energy storage device other than the energy storage device.

An estimation method acquires an element temperature measured for some energy storage devices among a plurality of energy storage devices constituting an energy storage apparatus and an environmental temperature of the energy storage apparatus, and estimates a temperature of each of the energy storage devices based on a heat balance model of each of the energy storage devices expressed by using the element temperature and the environmental temperature.

According to this configuration, the temperature of each energy storage device can be estimated using the element temperatures of some energy storage devices among the plurality of energy storage devices constituting the energy storage apparatus and the environmental temperature.

Hereinafter, the present invention will be specifically described with reference to the drawings illustrating embodiments thereof.

(First Embodiment)

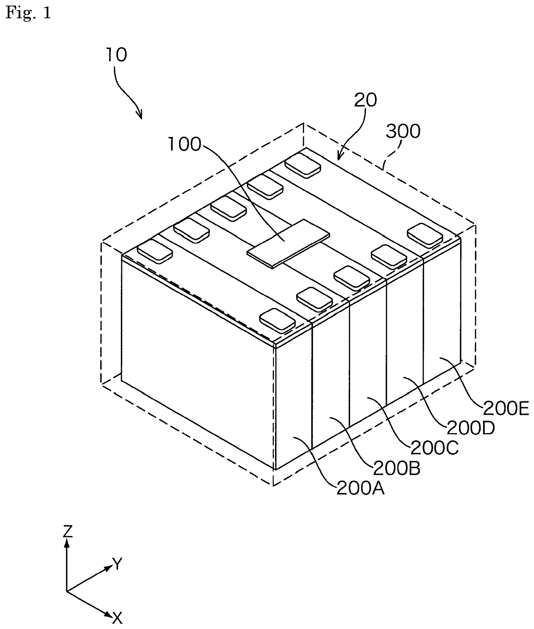

Fig. 1 is a schematic external view of an energy storage system 10 according to the present embodiment. The energy storage system 10 according to this embodiment includes an estimation device 100, energy storage devices 200A to 200E, and an accommodating case 300 which accommodates the estimation device 100 and the energy storage devices 200A to 200E. In the present embodiment, the energy storage devices 200A to 200E constitute an energy storage apparatus 20. In the following description, the energy storage devices 200A to 200E are also simply referred to as the energy storage devices 200 in a case where it is not necessary to distinguish the energy storage devices 200A to 200E from each other for explanation.

The estimation device 100 is, for example, a plate-like circuit board which is disposed on the upper surfaces of the plurality of energy storage devices 200 and on which a circuit for estimating the temperature of the energy storage device 200 at a predetermined point of time is mounted. Specifically, the estimation device 100 is connected to all the energy storage devices 200, acquires information from each energy storage device 200, and estimates the temperature of each energy storage device 200 at a predetermined point of time.

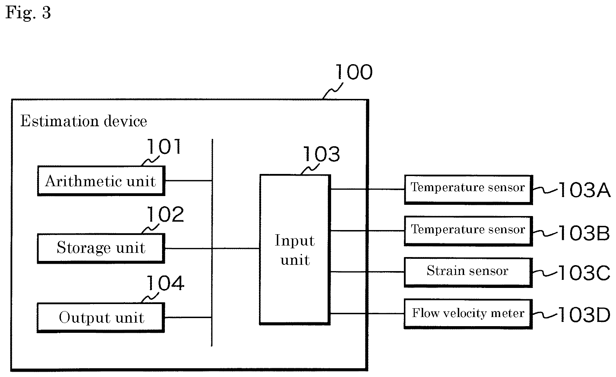

The position where the estimation device 100 is disposed is not limited to the upper surfaces of the energy storage devices 200. Alternatively, it may be side surfaces of the energy storage devices 200 or lower surfaces of the energy storage devices 200. The shape of the estimation device 100 is also not particularly limited. Further, the estimation device 100 may be a server device located away from the energy storage devices 200, and may be configured to acquire information of sensors (sensors 103A to 103D illustrated in Fig. 3) by communication.

The energy storage device 200 is a secondary battery such as a lithium ion secondary battery. The energy storage device 200 is applied to a power source for an automobile such as an electric vehicle (EV), a hybrid electric vehicle (HEV), or a plug-in hybrid electric vehicle (PHEV), a power source for electronic equipment, a power source for power storage, and the like. In Fig. 1, five rectangular energy storage devices 200 are arranged in series to form an assembled battery.

The number of the energy storage devices 200 is not limited to five. For example, the number of the energy storage devices 200 may be one or two or more. Further, some energy storage devices 200 may be connected in parallel. The energy storage device 200 may be a secondary battery other than the lithium ion secondary battery.

Hereinafter, a configuration of the energy storage device 200 will be described.

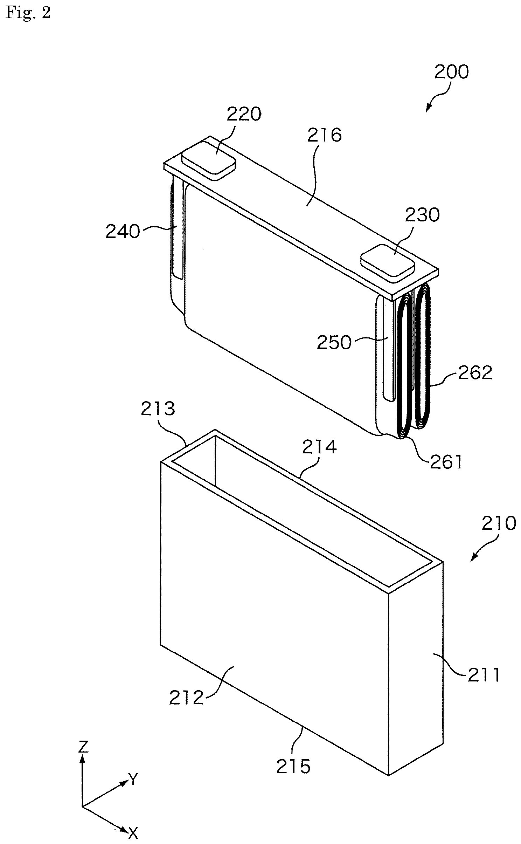

Fig. 2 is a perspective view illustrating a configuration of the energy storage device 200. To be more specific, Fig. 2 illustrates a configuration where a body portion of a case 210 is separated from the energy storage device 200.

As illustrated in Fig. 2, the energy storage device 200 includes the case 210, a positive electrode terminal 220, and a negative electrode terminal 230. A positive electrode current collector 240, a negative electrode current collector 250, and two electrode assemblies 261 and 262 are accommodated in the case 210.

In addition to the above components, a spacer disposed inside the case 210, a gasket disposed around the terminal, a gas release valve for releasing the pressure in the case 210 when the pressure increases, an insulating film enclosing the electrode assemblies 261 and 262, and the like may be disposed. Although an electrolyte solution is sealed in the case 210, the illustration is omitted. A type of the electrolyte solution is not particularly limited as long as performance of the energy storage device 200 is not impaired, and various types of electrolyte solutions can be selected.

The case 210 is a box-shaped member including plate-shaped side walls 211 to 214 and a bottom wall 215 constituting a case main body, and a plate-shaped lid body 216 that closes an opening of the case main body. As a material of the case 210, for example, weldable metal such as stainless steel, aluminum, or an aluminum alloy, or a resin can be used.

The electrode assemblies 261 and 262 are two energy storage elements (power generating elements) each including a positive electrode plate, a negative electrode plate, and a separator and can store electricity. That is, the two electrode assemblies of the electrode assembly 261 and the electrode assembly 262 are arranged side by side in the direction of the Y axis illustrated in Fig. 2.

Here, the positive electrode plate of each of the electrode assemblies 261 and 262 is obtained by forming a positive active material layer on a positive electrode substrate layer which is a long belt-shaped current collecting foil made of aluminum, an aluminum alloy, or the like. The negative electrode plate is obtained by forming a negative active material layer on a negative electrode substrate layer which is a long belt-shaped current collecting foil made of copper, a copper alloy, or the like. As the separator, for example, a microporous sheet made of a resin or a nonwoven fabric can be used. As the current collecting foil, a known material such as nickel, iron, stainless steel, titanium, baked carbon, a conductive polymer, conductive glass, or an Al-Cd alloy may be appropriately used.

The electrode assemblies 261 and 262 are each formed by laminating plates. That is, the electrode assemblies 261 and 262 are each formed by winding the positive electrode plate and the negative electrode plate which are arranged in a layered manner such that the separator is sandwiched between the positive electrode plate and the negative electrode plate. Specifically, in the electrode assemblies 261 and 262, the positive electrode plate and the negative electrode plate are wound with the separator interposed therebetween so as to be shifted from each other in the direction of the winding axis (virtual axis parallel to the X axis illustrated in Fig. 2). Only the separator with neither the positive electrode plate nor the negative electrode plate interposed therebetween is wound around the outermost periphery of each of the electrode assemblies 261 and 262 by 1 to 2 turns in a state of being overlapped in a double manner to ensure insulation. In the present embodiment, an oval shape is illustrated as a cross-sectional shape of each of the electrode assemblies 261 and 262. Alternatively, the cross-sectional shape of each of the electrode assemblies 261 and 262 may be an elliptic shape or the like.

As the positive active material used for the positive active material layer, a known material can be appropriately used as long as it is a positive active material capable of occluding and releasing lithium ions. For example, a polyanion compound such as $LiMPO_4$, $LiMSiO_4$, or $LiMBO_3$ (M represents one or more transition metal elements selected from Fe, Ni, Mn, Co, and the like), lithium titanate, a spinel type lithium manganese oxide such as $LiMn_2O_4$ or $LiMn_{1.5}Ni_{0.5}O_4$, a lithium transition metal oxide such as $LiMO_2$ (M represents one or more transition metal elements selected from Fe, Ni, Mn, Co, and the like), or the like can be used as the positive active material.

As the negative active material used for the negative active material layer, a known material can be appropriately used as long as it is a negative active material capable of occluding and releasing lithium ions. Examples of the negative active material include lithium metal, a lithium alloy (lithium metal-containing alloys such as lithium-silicon, lithium-aluminum, lithium-lead, lithium-tin, lithium-aluminum-tin, lithium-gallium, and Wood's alloy), an alloy capable of occluding and releasing lithium, a carbon material (for example, graphite, non-graphitizable carbon, graphitizable carbon, low-temperature baked carbon, amorphous carbon, and the like), a silicon oxide, a metal oxide, a lithium metal oxide ($Li_4Ti_5O_{12}$ or the like), a polyphosphoric acid compound, and a compound of a transition metal and a group 14 element to a group 16 element, such as $Co_3O_4$ or $Fe_2P$, which is generally called a conversion negative electrode.

The positive electrode terminal 220 is an electrode terminal electrically connected to the positive electrode plate of each of the electrode assemblies 261 and 262, and the negative electrode terminal 230 is an electrode terminal electrically connected to the negative electrode plate of each of the electrode assemblies 261 and 262. The positive electrode terminal 220 and the negative electrode terminal 230 are attached to the lid body 216. The positive electrode terminal 220 and the negative electrode terminal 230 are formed of, for example, aluminum or an aluminum alloy.

The positive electrode current collector 240 is a member having conductivity and rigidity which is electrically connected (joined) to the positive electrode terminal 220 and the positive electrode plate of each of the electrode assemblies 261 and 262. The negative electrode current collector 250 is a member having conductivity and rigidity which is electrically connected (joined) to the negative electrode terminal 230 and the negative electrode plate of each of the electrode assemblies 261 and 262. The positive electrode current collector 240 and the negative electrode current collector 250 are fixed to the lid body 216. Similarly to the positive electrode substrate layer, the positive electrode current collector 240 is formed of aluminum or an aluminum alloy. The negative electrode current collector 250 is formed of copper, a copper alloy, or the like similarly to the negative electrode substrate layer.

Hereinafter, a configuration of the estimation device 100 will be described.

Fig. 3 is a block diagram illustrating an internal configuration of the estimation device 100. The estimation device 100 includes an arithmetic unit (estimation unit) 101, a storage unit 102, an input unit 103, and an output unit 104.

The arithmetic unit 101 is an optional arithmetic circuit including a microcomputer, a volatile or nonvolatile memory, and the like. The microcomputer controls the operation of each part of hardware according to a computer program stored in advance in the memory, and causes the entire device to function as the estimation device of the present application. Specifically, the arithmetic unit 101 performs calculation for estimating the temperature of each energy storage device 200 based on a heat balance model of each energy storage device 200 expressed by using an element temperature and an environmental temperature. Here, the element temperature indicates a temperature of the energy storage device 200 measured by the temperature sensor 103A described later. The environmental temperature indicates an outside temperature of the energy storage apparatus 20 (that is, a temperature of the space in which the energy storage apparatus 20 is disposed).

In the present embodiment, the arithmetic unit 101 is an optional calculation circuit including a microcomputer, a volatile or nonvolatile memory, and the like. Alternatively, the arithmetic unit 101 may include a central processing unit (CPU), a read only memory (ROM), a random access memory (RAM), and the like.

The storage unit 102 is a storage device such as a flash memory. The storage unit 102 stores data necessary for arithmetic of temperature estimation of each energy storage device 200. For example, the storage unit 102 includes data such as a volume, a surface area, specific heat, and a density of each energy storage device 200, a value of thermal conductance between the adjacent energy storage devices 200, and a heat transfer coefficient to the outside.

The value of the thermal conductance used for the arithmetic of the temperature estimation may change due to expansion of the energy storage device 200. Therefore, the storage unit 102 may store a table indicating a relationship between a value of strain measured by the strain sensor 103C described later and the value of the thermal conductance.

The value of the heat transfer coefficient used for the arithmetic of the temperature estimation may change depending on the flow of air around the energy storage apparatus 20. Therefore, the storage unit 102 may store a table indicating the relationship between a value of a flow velocity measured by the flow velocity meter 103D described later and the value of the heat transfer coefficient. Alternatively, arithmetic for calculating the heat transfer coefficient from a relational expression established among the Nusselt number, the Prandtl number, and the Reynolds number may be performed.

The input unit 103 includes an interface for connecting various sensors. The sensors connected to the input unit 103 include a temperature sensor 103A that measures the temperature (element temperature) of the energy storage device 200. The temperature sensor 103A is an existing sensor such as a thermocouple or a thermistor. In the present embodiment, the energy storage device 200 to be measured is a part (for example, the energy storage device 200E) of the five energy storage devices 200A to 200E included in the energy storage apparatus 20. The number of the energy storage devices 200 to be measured may be one or two to four. That is, when the number of the energy storage apparatus 20 is N (N is an integer of 2 or more), the number of the energy storage devices 200 to be measured is appropriately set within a range of 1 to (N-1). The temperature sensor 103A is disposed, for example, on the upper surface of the energy storage apparatus 20. Alternatively, the temperature sensor 103A is disposed on the side surface or the lower surface of the energy storage apparatus 20.

The temperature sensor 103B that measures the environmental temperature of the energy storage apparatus 20 may be connected to the input unit 103. The temperature sensor 103B is an existing sensor such as a thermocouple or a thermistor. The temperature sensor 103B may be installed at an appropriate position of the energy storage apparatus 20 or may be installed at an appropriate position in the surroundings. When the estimation device 100 includes a communication interface that communicates with an external device, the information on the environmental temperature may be acquired by communication instead of the configuration that acquires the information on the environmental temperature from the temperature sensor 103B.

The strain sensor 103C that detects the magnitude of strain of the energy storage device 200 may be connected to the input unit 103. The strain sensor 103C is an existing sensor using a strain gauge type load cell or the like. The strain sensor 103C is provided for each of the energy storage devices 200.

To the input unit 103, the flow velocity meter 103D that measures the flow of air around the energy storage apparatus 20 may be connected. The flow velocity meter 103D is an existing measuring instrument such as a flow meter. The flow velocity meter 103D is installed at an appropriate position around the energy storage apparatus 20.

The output unit 104 includes an interface for connecting an external device. The output unit 104 outputs a temperature estimation result of each energy storage device 200 which is a calculation result of the arithmetic unit 101 to the external device. In one example, the external device connected to the output unit 104 is a management device that manages the state of the energy storage apparatus 20 or a control device that controls the operation of the energy storage apparatus 20. Alternatively, the external device connected to the output unit 104 may be a control device such as a mobile terminal or an electric vehicle that operates by power supplied from the energy storage apparatus 20. The external device may calculate a state of charge (SOC), a state of health (SOH), and the like of the energy storage apparatus based on the temperature estimation result of the estimation device 100. The external device may control the operation of the energy storage apparatus 20 according to the temperature estimation result of the estimation device 100.

Hereinafter, the contents of the arithmetic processing executed by the estimation device 100 will be described. The estimation device 100 estimates the temperature of each of the energy storage devices 200A to 200E using the heat balance model in consideration of the element temperature measured for some energy storage devices 200 (for example, 200E) among the plurality of energy storage devices 200 (200A to 200E) constituting the energy storage apparatus 20 and the environmental temperature of the energy storage apparatus 20.

The heat balance model of each of the energy storage devices 200A to 200E is expressed by a heat transfer equation, and for example, Expression 1 below is used.

[Expression 1]

$$\rho C_p V \frac{dT_1}{dt} = k_{12}(T_2 - T_1) + S_1 h_1(T_0 - T_1) + Q_1$$

$$\rho C_p V \frac{dT_2}{dt} = k_{12}(T_1 - T_2) + k_{32}(T_3 - T_2) + S_2 h_2(T_0 - T_2) + Q_2$$

$$\rho C_p V \frac{dT_3}{dt} = k_{23}(T_2 - T_3) + k_{34}(T_4 - T_3) + S_3 h_3(T_0 - T_3) + Q_3$$

$$\rho C_p V \frac{dT_4}{dt} = k_{34}(T_3 - T_4) + k_{45}(T_5 - T_4) + S_4 h_4(T_0 - T_4) + Q_4$$

$$\rho C_p V \frac{dT_5}{dt} = k_{45}(T_4 - T_5) + S_5 h_5(T_0 - T_5) + Q_5$$

Here, $T_1$ to $T_5$, $S_1$ to $S_5$, $Q_1$ to $Q_5$, and $h_1$ to $h_5$ represent the temperature (K), the surface area (m$^2$), the heat generation amount (W), and the heat transfer coefficient (W/m$_2$/K) to the outside of the energy storage devices 200A to 200E, respectively. $k_{ij}$ represents thermal conductance (W/K) between the i-th energy storage device 200 (for example, the energy storage device 200A) and the j-th energy storage device 200 (for example, the energy storage device 200B). $\rho$, $C_p$, and V represent the density (kg/m$^3$), specific heat (J/kg/K), and volume (m$^3$) of the energy storage device 200. Alternatively, the values of the density, specific heat, and volume may be individually set for the energy storage devices 200A to 200E. To represents the environmental temperature (K).

The left side in Expression 1 represents the amount of heat used to increase the temperature of the energy storage device 200. A term including the thermal conductance kij on the right side represents thermal conduction based on a temperature difference between the adjacent energy storage devices 200 and 200. A term including the heat transfer coefficients $h_1$ to $h_5$ on the right side represents heat dissipation from the energy storage device 200 to the outside, and has a negative value when heat dissipation occurs. A term including $Q_1$ to $Q_5$ represents heat generation of the energy storage apparatus 20. The cause of the heat generation includes Joule heat due to energization, reaction heat, and the like.

In the present embodiment, the time dependency of parameters other than $T_1$ to $T_5$ is not considered, but from the characteristics of a general Kalman filter, when the time dependency of parameters other than $T_1$ to $T_5$ is considered, temperature estimation can be performed by a completely similar calculation method.

The arithmetic unit 101 may perform calculation using a preset value as the value of the thermal conductance kij in Expression 1, or may perform calculation using a value changed according to the strain of the energy storage device 200. In the latter case, the value of the thermal conductance corresponding to the strain of the energy storage device 200 may be read from a table defining the relationship between the strain of the energy storage device 200 and the thermal conductance.

The arithmetic unit 101 may perform calculation using preset values as the values of the heat transfer coefficients $h_1$ to $h_5$ in Expression 1, or may perform calculation using values changed according to the flow velocity of the surrounding fluid. In the latter case, the value of the heat transfer coefficient corresponding to the flow velocity of the surrounding fluid may be read from a table defining the relationship between the flow velocity and the heat transfer coefficient.

By rewriting the time derivative of the left side in Expression 1 by the time difference, Expression 2 below is obtained.

[Expression 2]

$$\frac{\rho C_p V\{T_1(k+1) - T_1(k)\}}{\Delta t} = -(k_{12} + S_1 h_1)T_1(k) + k_{12}T_2(k) + S_1 h_1 T_0 + Q_1$$

$$\frac{\rho C_p V\{T_2(k+1) - T_2(k)\}}{\Delta t} = k_{12}T_1(k) - (k_{12} + k_{23} + S_2 h_2)T_2(k) + k_{23}T_3(k) + S_2 h_2 T_0 + Q_2$$

$$\frac{\rho C_p V\{T_3(k+1) - T_3(k)\}}{\Delta t} = k_{23}T_2(k) - (k_{23} + k_{34} + S_3 h_3)T_3(k) + k_{34}T_4(k) + S_3 h_3 T_0 + Q_3$$

$$\frac{\rho C_p V\{T_4(k+1) - T_4(k)\}}{\Delta t} = k_{34}T_3(k) - (k_{34} + k_{45} + S_4 h_4)T_4(k) + k_{45}T_5(k) + S_4 h_4 T_0 + Q_4$$

$$\frac{\rho C_p V\{T_5(k+1) - T_5(k)\}}{\Delta t} = k_{45}T_4(k) - (k_{45} + S_5 h_5)T_5(k) + S_5 h_5 T_0 + Q_5$$

Here, k is a natural number and represents a time step.

By arranging Expression 2, Expression 3 below is obtained.

[Expression 3]

$$T_1(k+1) = \{1 - \alpha(k_{12} + S_1 h_1)\}T_1(k) + \alpha k_{12}T_2(k) + \alpha(S_1 h_1 T_0 + Q_1)$$

$$T_2(k+1) = \alpha k_{12}T_1(k) + \{1 - \alpha(k_{12} + k_{23} + S_2 h_2)\}T_2(k) + \alpha k_{23}T_3(k) + \alpha(S_2 h_2 T_0 + Q_2)$$

$$T_3(k+1) = \alpha k_{23}T_2(k) + \{1 - \alpha(k_{23} + k_{34} + S_3 h_3)\}T_3(k) + \alpha k_{34}T_4(k) + \alpha(S_3 h_3 T_0 + Q_3)$$

$$T_4(k+1) = \alpha k_{34}T_3(k) + \{1 - \alpha(k_{34} + k_{45} + S_4 h_4)\}T_4(k) + \alpha k_{45}T_5(k) + \alpha(S_4 h_4 T_0 + Q_4)$$

$$T_5(k+1) = \alpha k_{45}T_4(k) + \{1 - \alpha(k_{45} + S_5 h_5)\}T_5(k) + \alpha(S_5 h_5 T_0 + Q_5)$$

Here, $a = (\rho C_p V / \Delta t)^{-1}$.

Next, in order to express Expression 3 as a matrix, a state vector x(k), a vector b, and a matrix A are defined by Expression 4 below

[Expression 4]

$$x(k) = \begin{Bmatrix} T_1(k) \\ T_2(k) \\ T_3(k) \\ T_4(k) \\ T_5(k) \end{Bmatrix} \quad , b = \begin{Bmatrix} \alpha(S_1 h_1 T_0 + Q_1) \\ \alpha(S_2 h_2 T_0 + Q_2) \\ \alpha(S_3 h_3 T_0 + Q_3) \\ \alpha(S_4 h_4 T_0 + Q_4) \\ \alpha(S_5 h_5 T_0 + Q_5) \end{Bmatrix}$$

$$A = \begin{Bmatrix} a_{11} & a_{12} & a_{13} & a_{14} & a_{15} \\ a_{21} & a_{22} & a_{23} & a_{24} & a_{25} \\ a_{31} & a_{32} & a_{33} & a_{34} & a_{35} \\ a_{41} & a_{42} & a_{43} & a_{44} & a_{45} \\ a_{51} & a_{52} & a_{53} & a_{54} & a_{55} \end{Bmatrix}$$

Here, $a_n = 1 - \alpha(k_{12} + S_1 h_1)$, $a_{22} = 1 - \alpha(k_{12} + k_{23} + S_2 h_2)$, $a_{33} = 1 - \alpha(k_{23} + k_{34} + S_3 h_3)$, $a_{44} = 1 - \alpha(k_{34} + k_{45} + S_4 h_4)$, and $a_{55} = 1 - \alpha(k_{45} + S_5 h_5)$. In addition, $a_{12} = a_{21} = \alpha k_{12}$, $a_{23} = a_{32} = \alpha k_{23}$, $a_{34} = a_{43} = \alpha k_{34}$, $a_{45} = a_{54} = \alpha k_{45}$, and others are 0.

In the case of using the representation of the discrete spatial state equation, Expression 4 can be described as follows. Here, u(k) = 1 may be set.

[Expression 5]

$$x(k+1) = Ax(k) + bu(k)$$

The observation equation is expressed as Expression 6. T in the upper right represents transposition. More generally, a direct item is added to the right side, but in the case of heat transfer, the representative time is larger than the arithmetic time, and thus it may be ignored in many cases.

[Expression 6]

$$y(k) = C^T x(k)$$

In the observation equation of Expression 6, a scalar observation value y(k) is used. Alternatively, the observation value may be plural. Here, C is an observation vector (or an observation matrix) using the element temperature measured by the temperature sensor 103A as a factor. For example, when only the temperature of the fifth energy storage device 200 is measured, the observation vector is expressed as Expression 7 below.

[Expression 7]

$$C = \begin{Bmatrix} 0 \\ 0 \\ 0 \\ 0 \\ 1 \end{Bmatrix}$$

Next, in a case where it is assumed that there is a disturbance (also referred to as noise, uncertainty, and the like) in the system and the observation, the state equation representing the state of the system and the observation equation representing the observation value of the state are expressed by Expression 8.

[Expression 8]

$$x(k+1) = Ax(k) + bu(k) + b_v v(k)$$
$$y(k) = c^T x(k) + w(k)$$

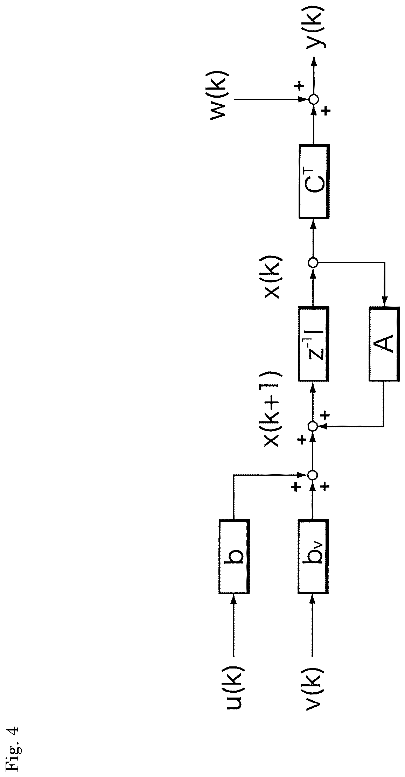

Here, v(k) and w(k) are system noise and observation noise, respectively. v(k) and w(k) assume normal white noise uncorrelated with each other. $b_v$ is a vector representing the influence of the system noise on each state quantity. Hereinafter, the variance of v(k) is $\sigma_v^2$, and the variance of w(k) is $\sigma_w^2$. A state variable diagram of the energy storage apparatus 20 using the state equation and the observation equation of Expression 8 is illustrated in Fig. 4. In Fig. 4, $z^{-1}$ represents a delayer by z conversion, and I represents an identity matrix.

The arithmetic unit 101 of the estimation device 100 applies the Kalman filter to the state space model illustrated in Fig. 4 to estimate the temperatures of all the energy storage devices 200 constituting the energy storage apparatus 20. Specifically, the arithmetic unit 101 performs temperature estimation by updating the state vector included in the state equation based on the observation vector C.

Specifically, the arithmetic unit 101 performs preliminary state estimation according to the expression below. The value calculated by Expression 9 is referred to as a prior estimated value.

[Expression 9]

$$\widehat{x_p}(k+1) = A\hat{x}(k) + bu(k)$$

Here, hats attached to $x_p(k + 1)$ and $x(k)$ represent estimated values. The subscript p represents a prior value.

Next, the arithmetic unit 101 calculates a prior error covariance matrix according to the expression below.

[Expression 10]

$$P_p(k + 1) = AP(k)A^T + \sigma_v^2 bb^T$$

Next, the arithmetic unit 101 determines a Kalman gain by the expression below using the prior error covariance matrix calculated by Expression 10.

[Expression 11]

$$G(k + 1) = \frac{P_p(k + 1)C}{C^T P_p(k + 1)C + \sigma_w^2}$$

Next, the arithmetic unit 101 estimates a posterior state using the determined Kalman gain. That is, the arithmetic unit 101 corrects the state before correction to the state after correction by multiplying the difference between the prior estimation value and the observation value by the Kalman gain as represented in Expression 12.

[Expression 12]

$$\hat{x}(k + 1) = \hat{x_p}(k + 1) + G(k + 1)\{y(k + 1) - C^T \hat{x_p}(k + 1)\}$$

In this case, the arithmetic unit 101 can calculate a posterior error covariance matrix by the expression below.

[Expression 13]

$$P(k + 1) = (I - G(k + 1)C^T)P_p(k + 1)$$

Hereinafter, a procedure of processing executed by the estimation device 100 will be described.

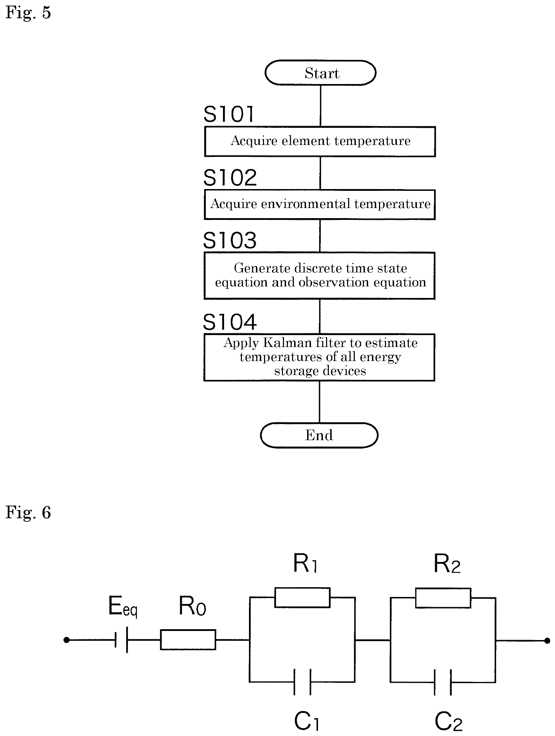

Fig. 5 is a flowchart illustrating the procedure of processing executed by the estimation device 100. The arithmetic unit 101 of the estimation device 100 acquires the temperature (element temperature) of the energy storage device 200 measured by the temperature sensor 103A through the input unit 103 (step S101). The acquired element temperature is temporarily stored in the storage unit 102 as time-series data.

The arithmetic unit 101 acquires the environmental temperature measured by the temperature sensor 103B through the input unit 103 (step S102). The acquired environmental temperature is temporarily stored in the storage unit 102 as time-series data.

In the present embodiment, the procedure of acquiring the environmental temperature after acquiring the element temperature is adopted. Alternatively, the element temperature may be acquired after the environmental temperature is acquired, or the element temperature and the environmental temperature may be simultaneously acquired. The environmental temperature and the element temperature do not need to be measured at the same time interval.

Next, the arithmetic unit 101 generates a discrete time state equation and the observation equation of Expression 8 (step S103). At this time, parameters such as the surface areas $S_1$ to $S_5$, the density p, the specific heat $C_p$, and the volume V of the energy storage device 200 included in the discrete time state equation are read from the storage unit 102.

Next, the arithmetic unit 101 applies the Kalman filter to the generated discrete time state equation to estimate the temperatures of all the energy storage devices 200 constituting the energy storage apparatus 20 (step S104). At this time, the arithmetic unit 101 applies the Kalman filter to update the state vector included in the state equation based on the latest observation value and the Kalman gain, thereby estimating the state (the temperature of the energy storage device 200 in the present embodiment).

As described above, the estimation device 100 according to the present embodiment can estimate the temperatures of all the energy storage devices by using the element temperatures of some energy storage devices 200 (for example, the energy storage devices 200E) among the energy storage devices 200A to 200E constituting the energy storage apparatus 20 and the environmental temperature. That is, the present application provides a soft sensor for an energy storage apparatus temperature.

Since the estimation device 100 performs temperature estimation using the Kalman filter, a value close to a true value can be calculated even when noise is included in the system or the sensor.

Since the Kalman filter is in the form of a recurrence formula, it is not necessary to store all the past time-series data. Therefore, the present application can be realized with a simple and inexpensive device configuration. The algorithm is relatively simple and has a small amount of calculation, and is also suitable for online processing.

In the present embodiment, parameters A, b, and C of the system are constants independent of time, that is, time-invariant systems. Alternatively, these parameters A, b, and C may be parameters dependent on the time (k), that is, time-variant systems. In that case, it is only necessary to set, for the expressions corresponding to Expressions 9 to 13, the parameters A, b, and C of the system, the variance $\sigma_v^2$ of the system noise, and the variance $\sigma_w^2$ of the observation noise as functions of the time (k) as shown in Expressions 14 to 18 below, respectively. Therefore, the estimation device 100 can apply an estimation method of the present invention even when the environmental temperature, the contact state (thermal conductance) between the energy storage devices 200, and the heat generation amount of the energy storage device 200 change with time.

[Expression 14]

$$\widehat{x_p}(k+1) = A(k)\hat{x}(k) + b(k)u(k)$$

[Expression 15]

$$P_p(k+1) = A(k)P(k)A^T(k) + \sigma_v^2(k)b(k)b^T(k)$$

[Expression 16]

$$G(k+1) = \frac{P_p(k+1)C(k+1)}{C^T(k+1)P_p(k+1)C(k+1) + \sigma_w^2(k+1)}$$

[Expression 17]

$$\hat{x}(k+1) = \widehat{x_p}(k+1) + G(k+1)\{y(k+1) - C^T(k+1)\widehat{x_p}(k+1)\}$$

[Expression 18]

$$P(k+1) = (I - G(k+1)C^T(k+1))P_p(k+1)$$

Hereinafter, an application example of temperature estimation will be described.

(Application Example 1)

An equivalent circuit model is well known as a mathematical model representing electrical characteristics of an energy storage device represented by a lithium ion battery. Fig. 6 is a circuit diagram illustrating an example of the equivalent circuit model. An equivalent circuit model of an energy storage device is often expressed by, for example, a combination of a resistor, a capacity component, and a voltage source as illustrated in Fig. 6.

In Fig. 6, $R_0$ is an ohmic resistance component, $R_1$ is a reaction resistance component of the positive electrode, $C_1$ is a capacity component of the positive electrode, $R_2$ is a reaction resistance component of the negative electrode, $C_2$ is a capacitance component of the negative electrode, and $E_{eq}$ is an open circuit voltage (OCV). However, Fig. 6 is an example, and there is no limitation on a combination of series and parallel or the number and type of electric circuit elements.

It is known that charge-discharge characteristics of energy storage devices represented by lithium ion batteries are strongly affected by temperature and SOC. The SOC is an abbreviation of State Of Charge, and a full charge state is represented as 100% and a full discharge state is represented as 0%. The components of $R_0$ to $R_2$, $C_1$ to $C_2$, and $E_{eq}$ are expressed as a two-variable function of the SOC and the temperature. As the relationship between the values of $R_0$ to $R_2$, $C_1$ to $C_2$, and $E_{eq}$, and the SOC and the temperature, values acquired in advance may be used.

The energy storage system 10 may hold a mathematical model of the energy storage device 200 in addition to the estimation device 100. The mathematical model of the energy storage device 200 includes information on the open circuit potential and the internal impedance of the energy storage device 200, and indicates the relationship between the current and the voltage. The mathematical model of the energy storage device 200 is used for a state estimator (also referred to as an observer) and future prediction of the energy storage device 200.

By using the estimation device 100, it is possible to precisely and accurately estimate the temperature of each energy storage device 200, so that it can be expected that the characteristic value of each element of the equivalent circuit becomes more accurate and the accuracy of the simulation of the charge-discharge characteristics is also improved.

(Application Example 2)

As a battery model other than the equivalent circuit, for example, a model disclosed in Non-Patent Document "Comparison of Modeling Predictions with Experimental Data from Plastic Lithium Ion Cells, M. Doyle, T. F. Fuller and J. Newman, Journal of The Electrochemical Society, 143 (6), 1890-1903 (1996)" may be used. This model is a physical model of a battery (in particular, a lithium ion battery) called a so-called Newman model. By imparting temperature dependency to the equation (that is, a Butler-Volmer equation) of the reaction resistance, the ion conductivity, the ion diffusion coefficient, or other physical property values in this model, and imparting the temperature estimation value obtained from the estimation device 100 to the simulation of the Newman model as an input condition, it becomes possible to precisely simulate the charge-discharge characteristics.

Alternatively, a single particle model in which the electrode is represented by a single active material particle may be used. For the single particle model, for example, a model disclosed in Non-Patent Document "Single-Particle Model for a Lithium-Ion Cell: Thermal Behavior, Meng Guo, Godfrey Sikha, and Ralph E. White, Journal of The Electrochemical Society, 158 (2) 122-132 (2011)" may be referred to. By imparting temperature dependency to the equation (that is, a Butler-Volmer equation) of the reaction resistance, the ion conductivity, the ion diffusion coefficient, or other physical property values in this model, and imparting the temperature estimation value obtained from the estimation device 100 to the simulation of the single particle model as an input condition, it becomes possible to precisely simulate the charge-discharge characteristics.

Alternatively, a polynomial model in which the open circuit voltage OCV and the internal resistance are represented by a power function of temperature and SOC may be used. For the polynomial model, for example, a model disclosed in Non-Patent Document "Modeling the Dependence of the Discharge Behavior of a Lithium-Ion Battery on the Environmental Temperature, Ui Seong Kim, a Jaeshin Yi, a Chee Burm Shin, Taeyoung Han, b and Seongyong Park, Journal of The Electrochemical Society, 158 (5) 611-618 (2011)" may be referred to. By imparting the temperature estimation value described in the embodiment to the simulation of the polynomial model as an input condition, it becomes possible to precisely simulate the charge-discharge characteristics.

Further alternatively, a model representing the characteristics of the energy storage device 200 and requiring input of temperature enables precise charge-discharge characteristic simulation using the estimation device 100.

(Application Example 3)

The temperature distribution in the energy storage apparatus 20 can be estimated by using the estimation device 100. An appropriate cooling condition or heating condition may be determined based on the estimated temperature distribution. Examples of the cooling condition and the heating condition include an air volume, a wind direction, and an air temperature in the case of air cooling, and a refrigerant flow rate and a refrigerant temperature in the case of water cooling. As a method of determining the condition, feedback control such as PID control or on/off control may be used.

(Application Example 4)

Abnormal heating of the energy storage device 200 can be estimated by using the estimation device 100. The estimated temperature of the energy storage device 200 may become an abnormal value (the abnormal value is often higher than normal). Since there is a possibility that such an energy storage device 200 is in an abnormal state due to an internal short-circuit or the like, it is desirable to immediately take measures such as disconnection.

(Application Example 5)

The use of the estimation device 100 enables more precise deterioration prediction simulation even in a case where the simulation is based on limited temperature information. Specifically, by using the temperature estimated by the estimation device 100 as the temperature included in the known deterioration prediction expression, more precise deterioration prediction is enabled. In particular, in a storage battery system in which an assembled battery formed by connecting a plurality of battery cells in series is used, since the performance of a battery cell having a large deterioration has a very large influence on the performance of the entire battery system, it is very useful to perform more precise deterioration prediction using the temperature estimation value obtained by the estimation device 100.

It is known that there are at least four types of deterioration mechanisms of batteries represented by lithium ion batteries: (1) isolation of active material particles, (2) decrease in charge supports, (3) increase in electric resistance, and (4) decrease in conductivity in an electrolyte solution. These deterioration mechanisms contribute in combination to cause reduction in charge-discharge characteristics and capacity of the battery.

The temperature is particularly important among factors that determine the progress rate of deterioration. Therefore, it is important to precisely grasp the temperature also from the viewpoint of deterioration prediction. For example, the estimation device 100 can determine the progress rate of deterioration on the assumption that there is temperature dependency based on the Arrhenius type reaction rate expression. Alternatively, the estimation device 100 may determine the progress rate of deterioration based on a function of any other temperature. It is known that deterioration includes time dependent deterioration (sometimes referred to as calendar deterioration) that deteriorates with time and cycle deterioration that deteriorates according to the number of cycles, and it has been confirmed by experiments and the like that both are functions of temperature.

The estimation device 100 may simulate the deterioration of the energy storage apparatus 20 based on the determined progress rate of deterioration. As a deterioration prediction method, for example, a method disclosed in Patent Document 'Japanese Patent Application No. 2019-064218: DEVELOPMENT SUPPORT DEVICE, DEVELOPMENT SUPPORT METHOD, AND COMPUTER PROGRAM' may be used.

(Application Example 6)

The values of $Q_1$ to $Q_5$ described in Expressions 1 to 4 may be calculated based on the battery models as described in (Application Example 1) and (Application Example 2).

In the present embodiment, temperature estimation is performed by applying a general Kalman filter. Alternatively, an appropriate filter such as a non-linear Kalman filter such as an unscented Kalman filter or an extended Kalman filter, or a particle filter may be used. That is, the arithmetic unit 101 may estimate the latent variable based on the model prediction value obtained from the equation describing the system including the energy storage apparatus 20 and the latest observation value using the filter described above. Here, the latent variable is a parameter that has a causal relationship with the observation value but cannot be directly observed.

It is to be understood that the embodiment disclosed herein is illustrative in all respects and not restrictive. The scope of the present invention is defined not by the meanings described above but by the claims, and is intended to include meanings equivalent to the claims and all modifications within the scope.

For example, the energy storage apparatus 20 may be a module in which a plurality of cells are connected in series, a bank in which a plurality of modules are connected in series, a domain in which a plurality of banks are connected in parallel, or the like. When the energy storage apparatus 20 is a bank including a plurality of modules, the estimation device 100 may acquire temperatures measured for some of the modules as element temperatures, and estimate temperatures of the respective energy storage devices (in this example, temperatures of the respective modules) including temperatures of the modules that have not been measured. Similarly, when the energy storage apparatus 20 is a domain including a plurality of banks, the estimation device 100 may acquire temperatures measured for some of the banks as element temperatures, and estimate temperatures of the respective energy storage devices (in this example, temperatures of the respective banks) including temperatures of the banks that have not been measured.

DESCRIPTION OF REFERENCE SIGNS

10: energy storage system
20: energy storage apparatus
100: estimation device
101: arithmetic unit
102: storage unit
103: input unit
103A: temperature sensor
103B: temperature sensor
103C: strain sensor
103D: flow velocity meter
104: output unit
200: energy storage device

**Claims**

1. An estimation device comprising:

   an input unit to which an element temperature measured for some energy storage devices among a plurality of energy storage devices constituting an energy storage apparatus and an environmental temperature of the energy storage apparatus are input; and
   an estimation unit configured to estimate a temperature of each of the energy storage devices based on a heat balance model of each of the energy storage devices expressed by using the element temperature and the environmental temperature.

2. The estimation device according to claim 1, wherein the estimation unit includes a filter that estimates a latent variable based on a latest observation value and a model prediction value obtained from an equation describing a system including the energy storage apparatus.

3. The estimation device according to claim 1, wherein the estimation unit includes a Kalman filter that updates a state vector included in a state equation describing the heat balance model based on a latest observation value and a model prediction value obtained from the state equation.

4. The estimation device according to any one of claims 1 to 3,
   wherein the heat balance model includes a heat balance between the energy storage devices and a heat balance between each of the energy storage devices and a surrounding environment.

5. The estimation device according to any one of claims 1 to 4,

   wherein the heat balance model includes a thermal conductance between the energy storage devices as a parameter, and
   wherein the estimation unit changes a value of the thermal conductance used for temperature estimation of each of the energy storage devices according to a change in strain of the energy storage devices.

6. The estimation device according to any one of claims 1 to 5,

   wherein the heat balance model includes, as a parameter, a heat transfer coefficient from each of the energy storage devices to a surrounding environment, and
   wherein the estimation unit changes a value of the heat transfer coefficient used for temperature estimation of each of the energy storage devices according to a flow velocity of a surrounding fluid.

7. An estimation device comprising:

   an input unit to which environmental temperature information around an energy storage device and element temperature information of another energy storage device other than the energy storage device are input; and an estimation unit configured to estimate a temperature of each of the energy storage devices from a heat balance of each of the energy storage devices based on the information input to the input unit.

8. The estimation device according to any one of claims 1 to 7, further comprising a simulation execution unit that determines a deterioration progress rate of each of the energy storage devices using the temperature of each of the energy storage devices estimated by the estimation unit as an argument, and simulates deterioration of each of the energy storage devices based on the determined deterioration progress rate.

9. An estimation method comprising:

acquiring an element temperature measured for some energy storage devices among a plurality of energy storage devices constituting an energy storage apparatus and an environmental temperature of the energy storage apparatus; and
estimating a temperature of each of the energy storage devices based on a heat balance model of each of the energy storage devices expressed by using the element temperature and the environmental temperature.

10. The estimation method according to claim 9, further comprising:

determining a deterioration progress rate of each of the energy storage devices using the estimated temperature of each of the energy storage devices as an argument; and
simulating deterioration of each of the energy storage devices based on the determined deterioration progress rate.

Fig. 1

Fig. 2

Fig. 3

Fig. 4

Fig. 5

Start

S101
Acquire element temperature

S102
Acquire environmental temperature

S103
Generate discrete time state
equation and observation equation

S104
Apply Kalman filter to estimate
temperatures of all energy
storage devices

End

Fig. 6

## INTERNATIONAL SEARCH REPORT

| International application No. |
|---|
| PCT/JP2020/012061 |

A.  CLASSIFICATION OF SUBJECT MATTER
G01K 1/20(2006.01)i; H01M 10/48(2006.01)i; H02J 7/04(2006.01)i
FI: H01M10/48 301; H02J7/04 L; G01K1/20
According to International Patent Classification (IPC) or to both national classification and IPC

B.  FIELDS SEARCHED

Minimum documentation searched (classification system followed by classification symbols)
G01K1/20; H01M10/48; H02J7/04

Documentation searched other than minimum documentation to the extent that such documents are included in the fields searched
Published examined utility model applications of Japan        1922–1996
Published unexamined utility model applications of Japan      1971–2020
Registered utility model specifications of Japan              1996–2020
Published registered utility model applications of Japan      1994–2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2014-26752 A (DENSO CORP.) 06.02.2014 (2014-02-06) paragraphs [0024]–[0038], [0053], fig. 1-6 | 1, 4, 7, 9<br>8, 10<br>2-3, 5-6 |
| Y | JP 2018-80969 A (TOYOTA MOTOR CORP.) 24.05.2018 (2018-05-24) paragraphs [0036]–[0042], fig. 1, 4-5 | 8, 10 |
| A | JP 2018-170144 A (MITSUBISHI MOTORS CORPORATION) 01.11.2018 (2018-11-01) paragraphs [0026]–[0031], fig. 1, 4-5 | 1-10 |
| A | JP 2003-185504 A (NISSAN MOTOR CO., LTD.) 03.07.2003 (2003-07-03) paragraphs [0025]–[0027], [0030], fig. 1, 5 | 1-10 |
| A | JP 2010-135075 A (CALSONIC KANSEI CORPORATION) 17.06.2010 (2010-06-17) paragraphs [0008]–[0013], [0024], fig. 1 | 1-10 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June 2020 (01.06.2020) | 09 June 2020 (09.06.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2020/012061

| Patent Documents referred in the Report | Publication Date | Patent Family | Publication Date |
|---|---|---|---|
| JP 2014-26752 A | 06 Feb. 2014 | (Family: none) | |
| JP 2018-80969 A | 24 May 2018 | (Family: none) | |
| JP 2018-170144 A | 01 Nov. 2018 | (Family: none) | |
| JP 2003-185504 A | 03 Jul. 2003 | (Family: none) | |
| JP 2010-135075 A | 17 Jun. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009099375 A
- JP 2019064218 A

**Non-patent literature cited in the description**

- **M. DOYLE ; T. F. FULLER ; J. NEWMAN.** Comparison of Modeling Predictions with Experimental Data from Plastic Lithium Ion Cells. *Journal of The Electrochemical Society,* 1996, vol. 143 (6), 1890-1903
- **MENG GUO ; GODFREY SIKHA ; RALPH E. WHITE.** Single-Particle Model for a Lithium-Ion Cell: Thermal Behavior. *Journal of The Electrochemical Society,* 2011, vol. 158 (2), 122-132
- **UI SEONG KIM ; JAESHIN YI ; CHEE BURM SHIN ; TAEYOUNG HAN ; SEONGYONG PARK.** Modeling the Dependence of the Discharge Behavior of a Lithium-Ion Battery on the Environmental Temperature. *Journal of The Electrochemical Society,* 2011, vol. 158 (5), 611-618